# EUROPEAN PATENT APPLICATION

(11) **EP 4 656 525 A1**
(43) Date of publication of application: **03.12.2025**
(21) Application number: 24178439.6
(22) Date of filing: 28.05.2024
(51) Int. Cl.: B64D 37/04, B64D 37/06, B64D 37/30, B64C 1/00, B64C 1/10

(54) **FUSELAGE ASSEMBLY FOR TANK INTEGRATION AND ABSORBING IMPACT ENERGY, AND AIRCRAFT**

(71) Applicant: AIRBUS Operations GmbH, 21129 Hamburg (DE)
(72) Inventor: Siemann, Martin, Hamburg (DE); Benthien, Hermann, Hamburg (DE)

(57) **Abstract**

The present invention provides a fuselage assembly (1) for tank integration and absorbing impact energy, in particular being used in an aircraft, the fuselage assembly (1) comprising: a tank device (2); a fuselage structure (3) with a fuselage diameter (d3), wherein the fuselage structure (3) at least partly encloses the tank device (2); and a support unit (4) with a lattice structure for supporting the tank device (2) inside the fuselage structure (3), wherein the support unit (4) is at least sectionwise in contact with the tank device (2) and the fuselage structure (3), wherein the lattice structure has a first characteristic length (l1) that is about one fiftieth of the fuselage diameter (d3) or less. Further the present invention provides an aircraft (10) comprising such a fuselage assembly (1).

## Description

The invention relates to a fuselage assembly for tank integration and absorbing impact energy, in particular being used in an aircraft. The invention is furthermore concerned with an aircraft containing such a fuselage assembly.

Generally, cryogenic fuels (e.g., liquid methane, liquid hydrogen, etc.) have lower volumetric energy densities than conventional jet fuels (e.g., kerosene based jet fuels). As a result, aircrafts employing cryogenic fuels often include large fuel tanks located inside or outside of the fuselage, since a volume inside the aircraft wings and the center wing box, where fuel is stored in conventional aircrafts, does not provide a sufficient volume for cryogenic fuels. To accommodate the large interior fuel tanks, the aircrafts generally employ fuselages having crowns, lumps, bulges and/or oversized dimensions.

Such a cryogenic liquid hydrogen (LH2) tank usually has a big volume, a low temperature inside, double wall, thin tank walls, and an insulation between the inner and outer tank. Furthermore, the LH2 tank has to remain tight for avoiding leakage of fuel from the tank under potential crash scenarios and redundancy is required. Therefore, there is a need of a smooth and flexible support of such a tank inside the fuselage.

For example the document "Bots, M. (2017). Energy absorption of additively manufactured lattices. Master thesis, Delft University of Technology." describes using a class of additive manufacturing, for example selective laser sintering (SLS), for fabricating lattice structures out of polypropylene, which were subjected to static and dynamic compressive loadings. The lattices were designed to determine the influence of the biomimetic density grading, cell shape and cell size in three distinct lattice configurations. The classification of lattices as cellular solids can lead to their applicability as sacrificial components to protect sensitive areas. Cellular solids excel as energy absorbers due to high levels of compaction they can obtain, before acting as a dense block of material. The compression before densification allows for energy to be stored elastically and plastically due to internal structural displacements.

Aspects of the invention may provide solutions for applying an energy absorbing support to carry a fuel tank in a fuselage.

According to the invention, this problem is solved in each case by the subject matters of the independent claims.

According to a first aspect of the invention, a fuselage assembly for tank integration and absorbing impact energy, in particular being used in an aircraft, is provided. The fuselage assembly comprises a tank device and a fuselage structure with a fuselage diameter, wherein the fuselage structure at least partly encloses the tank device. Further, the fuselage assembly comprises a support unit with a lattice structure for supporting the tank device inside the fuselage structure. The support unit is at least sectionwise in contact with the tank device and the fuselage structure. The lattice structure has a first characteristic length that is about one fiftieth of the fuselage diameter or less.

According to a second aspect of the invention, an aircraft comprising a fuselage assembly according to the first aspect of the invention is provided.

A fundamental concept of the invention is to provide a fuselage assembly that carries static and/or dynamic loads (such as flight, ground and thermal loads during normal operation) by providing an elastic deformation in such cases as well as impact loads by providing a plastic deformation. Thereby, the Pomelo fruit has been identified as a biological role model. The support unit can be used like an albedo in a pomelo fruit. The albedo in contrast to the dense outer flavedo exhibits a foam-like, cellular composition. The albedo can be made up of eight-armed cells with large intercellular spaces.

The aircraft can be configured as a hydrogen powered aircraft.

The support unit can be configured as an open cellular layer, for example. In particular, chapter 2. and chapter 4. of the document "Bots, M. (2017). Energy absorption of additively manufactured lattices. Master thesis, Delft University of Technology." teaches some features for the lattice structure, as it can also be used in the invention of this application. For example, the fuselage assembly can comprise a plurality of the support units. The plurality of the support units can be placed on any side of the tank device, in particular in front, below, at a lateral side and/or above with respect to the tank device.

A characteristic length of the lattice structure can vary depending on a position of the support unit and/or a thickness of the support unit.

In the meaning of this application, the characteristic length is defined as an edge length of a representative unit cell of a lattice structure or a foam. A representative unit cell refers to a small portion of the structure that presents a repeating topology that composes the lattice structure as a whole. In the meaning of this application, the term diameter also includes substantially round shaped forms such as an oval shape or the like.

The term static and/or dynamic loads is intended to encompass, for example, thermal loads, vehicle loads (e.g. flight loads), propulsion loads, or any other forces that are generated within the aircraft, or at the interface between the fuselage structure and the tank device. The tank device, due to its mass and inertia, may generate loads, in particular when the aircraft undergoes accelerations during operation on ground and in flight, which need to be transferred between the tank device and the fuselage structure, i. e. through tank attachments. Loads from outside of the tank device, such as fuselage loads, might substantially not be transmitted to such (non-structural) tank devices.

The term impact loads includes loads arising from potential, undesired crash scenarios. For example, in some crash scenarios, an impact originating from an undesired contact with the ground surface may be at least partially absorbed by the fuselage structure and/or the support unit.

For example, a plurality of support units can support the tank device. Thereby, the plurality of support units can be arranged such that there are gaps between adjacent support units.

A particular advantage in the solution according to an aspect of the invention is that the structural behavior of the fuselage assembly can be improved during a potential, undesired crash scenario when equipped with the support unit.

Furthermore, the support unit in combination with the fuselage structure can provide a flexible respectively elastically deformable structure to generate minimal coupling loads on the tank device due to aircraft, in particular fuselage, deformations.

Advantageous embodiments and further developments emerge from the description with reference to the figures.

According to some embodiments of the invention, the first characteristic length is about a hundredth of the fuselage diameter or less.

According to some further embodiments of the invention, the tank device comprises an outer tank diameter that is about fifty times, in particular a hundred times, of the first characteristic length or more. The outer tank diameter can substantially correspond to the fuselage diameter, wherein the fuselage diameter is at least a little bit larger than the outer tank diameter. The fuselage diameter can be an inner fuselage diameter, for example.

According to some further embodiments of the invention, the first characteristic length is in the range of about 4 mm to about 100 mm, preferably in the range of about 7.5 mm to about 75 mm, in particular in the range of about 10 mm to about 50 mm.

According to some further embodiments of the invention, the lattice structure further has a second characteristic length that is shorter than the first characteristic length. Thus, the second characteristic length can be present at a finer portion of the support unit compared to a portion of the support unit, where the lattice structure has the first characteristic length. The finer the support unit the shorter can be the characteristic length of the lattice structure. For example, the second characteristic length can be in the order of 1/5000 or 1/10000 of the fuselage diameter.

According to some further embodiments of the invention, the support unit comprises a linear-elastic deformation behavior up to a predetermined yield stress in the support unit and a plastic deformation behavior above the predetermined yield stress in the support unit. The predetermined yield stress can be chosen such that the linear-elastic deformation behavior can be provided in normal operations, in particular under flight and ground loads.

According to some further embodiments of the invention, the fuselage structure comprises an unpressurized caudal tank compartment. Hence, the support unit is configured such that its deformation behavior is substantially unaffected by a changing temperature or a changing air pressure.

For example, the fuselage structure can comprise a frame and a stringer. Additionally or alternatively, the fuselage structure can be configured as a trusswork.

According to some further embodiments of the invention, the fuselage structure comprises a pressure bulkhead, which is mechanically coupled to the support unit such that loads are carried by the pressure bulkhead in a longitudinal direction of the fuselage structure. That means that the pressure bulkhead can be mechanically coupled to the support unit such that loads in a longitudinal direction of the fuselage structure are carried and transferred by the pressure bulkhead into the surrounding fuselage structure and/or trusswork structure. Additionally or alternatively, loads can be carried by the support unit in the longitudinal direction of the fuselage structure. The pressure bulkhead can support the loads in the longitudinal direction at its connection to the fuselage structure. The support unit arranged between the tank device and the pressure bulkhead can distribute a peak load on the pressure bulkhead.

For example, the pressure bulkhead can have a hemispherical, dome-like or corrugated shape. Thereby, the loads in the longitudinal direction can be supported by the pressure bulkhead and/or the support unit over a large area. With such a shaped pressure bulkhead a smooth continuous load distribution from the tank device to the fuselage structure can be provided. Hence, the pressure bulkhead can be used for load distributing, in particular for transferring the loads in the longitudinal direction from the tank device into the fuselage structure.

According to some further embodiments of the invention, the tank device comprises means for providing a form fit with the support unit in a radial direction of the fuselage structure, wherein the support unit is in contact with the pressure bulkhead. Hence, the means can simplify an installation process of the tank device in relation to the pressure bulkhead or support unit arranged at the pressure bulkhead.

According to some further embodiments of the invention, the means protrude from a surface of the tank device. Preferably, the means can comprise or be made of the same lattice structure as the support unit. The means can be configured as a form fit interface between the tank device and the support unit in order to reduce or avoid peak loads.

According to some further embodiments of the invention, the tank device comprises an inner tank wall and an outer tank wall, which surrounds the inner tank wall contactlessly, wherein a lattice structure layer is disposed sectionwise between the inner tank wall and the outer tank wall. Thus, the lattice structure layer can prevent the inner tank wall from getting into contact with the outer tank wall in case of a load on the tank device exceeding a predefined threshold. In particular, the outer tank wall can surround the inner tank wall contactlessly except for supports between the inner tank wall and the outer tank wall, wherein the supports are configured to keep the inner tank wall in place relative to the outer tank wall.

Furthermore, the tank device can comprise the inner tank wall for containing a fuel and the outer tank wall surrounding the inner tank wall to define a vacuum insulating volume therebetween. The inner tank wall can transmit a load from the fuel (mass) through the supports to the outer tank wall, where this load is supported by means of a tank support, for example by the support unit respectively the lattice structure.

Optionally, the tank device can be configured for storing a cryogenic fluid. For example, the tank device can have a spherical or cylindrical shape with hemispherical, torispherical or dome-shaped caps delimiting the cylindrical part of the tank device. The tank device can be configured as a cryogenic tank for storing cryogenic fluids. The cryogenic tank is typically configured to be mounted on a vehicle for supplying cryogenic fuel to a propulsion system of the vehicle. The cryogenic tank can comprise an inner tank wall for containing a cryogenic fluid and an outer tank wall surrounding the inner tank wall to define a vacuum insulating volume therebetween.

The terms cryogenic fluids and cryogenic fuels used herein have their typical meaning as used in the art. Cryogenic fluids or fuels typically have a boiling point of below 120 Kelvin. Cryogenic fuels include liquified gases such as liquid hydrogen.

For example, the support unit can comprise or be made of plastics, like polyamide or polyurethane or both, or metals, preferably light-weight alloys, or combinations thereof. Alternatively or additionally, the support unit can comprise or be made of the lattice structure or a foam. Both the lattice structure or the foam can be made of the previously mentioned materials.

Depending primarily on the solid material properties of the support unit, once the predetermined yield stress is reached the support unit will either plastically deform, buckle or crush. This is followed by a relatively unstable plateau region where cells in the lattice structure of the support unit collapse as the strain increases with a minimal increase in stress. The plateau region can be the characteristic that makes the support unit an excellent energy absorber. The absorbed energy can be the integral of a stress-strain curve. A second stable region returns at the densification strain; all the ligaments are in contact and a steep increase in stress is observed.

The present invention is explained more specifically below on the basis of the exemplary embodiments indicated in the schematic figures, in which:
- Fig. 1: shows a schematic illustration in a side view of a fuselage assembly for tank integration and absorbing impact energy according to an embodiment of the invention;
- Fig. 2: shows a schematic illustration in a side view of a fuselage assembly for tank integration and absorbing impact energy according to a further embodiment of the invention;
- Fig. 3: shows a schematic illustration in a cut view of a tank device comprising means for a form fit before installing it to a support unit arranged at a pressure bulkhead according to a further embodiment of the invention;
- Fig. 4: shows a schematic illustration in a cut view of the tank device of Fig. 3 after installing it to the support unit arranged at a pressure bulkhead;
- Fig. 5: shows a schematic illustration of an aircraft comprising a fuselage assembly according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

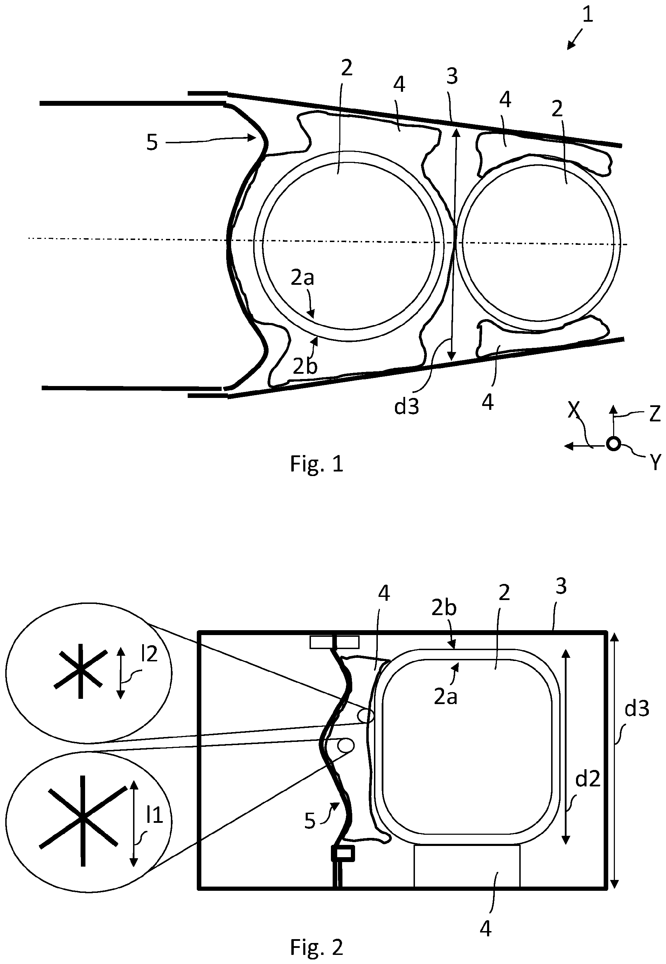

Fig. 1 shows a schematic illustration in a side view of a fuselage assembly 1 for tank integration and absorbing impact energy according to an embodiment of the invention.

The fuselage assembly 1 comprises a tank device 2. Optionally, the tank device 2 can be configured for storing a cryogenic fluid. In particular, the tank device 2 can be configured as a cryogenic tank for storing cryogenic fluids. Thereby, the cryogenic tank can comprise an inner tank wall 2a for containing a cryogenic fluid and an outer tank wall 2b surrounding the inner tank wall to define a vacuum insulating volume therebetween. The inner tank wall 2a can transmit a load from the fuel (mass) through the supports to the outer tank wall 2b, where this load is supported by means of a tank support, for example by the support unit 4 respectively the lattice structure.

The fuselage assembly 1 further comprises a fuselage structure 3 with a fuselage diameter d3, wherein the fuselage structure 3 at least partly encloses the tank device 2. Exemplarily, the fuselage structure 3 can be configured as an unpressurized caudal tank compartment. Hence, the support unit 4 is configured such that its deformation behavior is substantially unaffected by a changing temperature or a changing air pressure.

Moreover, the fuselage assembly 1 comprises a support unit 4 with a lattice structure for supporting the tank device 2 inside the fuselage structure 3, wherein the support unit 4 is at least sectionwise in contact with the tank device 2 and the fuselage structure 3. The lattice structure can have a first characteristic length 11 that is about one fiftieth of the fuselage diameter d3 or less. Specifically, the first characteristic length 11 is about a hundredth of the fuselage diameter d3 or less.

The support unit 4 may advantageously comprise a linear-elastic deformation behavior up to a predetermined yield stress in the support unit 4 and a plastic deformation behavior above the predetermined yield stress in the support unit 4. The predetermined yield stress can be chosen such that the linear-elastic deformation behavior can be provided in normal operations, in particular under flight and ground loads.

Here, the fuselage structure 4 can comprise a pressure bulkhead 5, which is mechanically coupled to the support unit 4 such that loads in a longitudinal direction X of the fuselage structure 2 can be carried and transferred by the pressure bulkhead 5 into the surrounding fuselage structure 2 and/or trusswork structure. Additionally or alternatively, loads can be carried by the support unit 4 in the longitudinal direction X of the fuselage structure 2. The pressure bulkhead 5 can support the loads in the longitudinal direction X at its connection to the fuselage structure 2.

The support unit 4 arranged between the tank device 2 and the pressure bulkhead 5, in Fig. 1 it corresponds to the left hand area of the support unit 4, can distribute a peak load on the pressure bulkhead 5. For example, the pressure bulkhead 5 can have a corrugated shape but is not limited to such a shape. Thereby, the loads in the longitudinal direction X can be supported by the pressure bulkhead 5 and/or the support unit 4 over a large area. With such a shaped pressure bulkhead 5 a smooth continuous load distribution from the tank device to the fuselage structure can be provided. Hence, the pressure bulkhead 5 can be used for load distributing, in particular for transferring the loads in the longitudinal direction X from the tank device 2 into the fuselage structure 3.

For example, a plurality of support units 4 can support the tank device 2. Thereby, the plurality of support units 4 can be arranged such that there are gaps between adjacent support units 4.

Fig. 2 shows a schematic illustration in a side view of a fuselage assembly 1 for tank integration and absorbing impact energy according to a further embodiment of the invention.

The fuselage assembly 1 comprises a tank device 2.

The fuselage assembly 1 further comprises a fuselage structure 3 with a fuselage diameter d3, wherein the fuselage structure 3 at least partly encloses the tank device 2.

Moreover, the fuselage assembly 1 comprises a support unit 4 with a lattice structure for supporting the tank device 2 inside the fuselage structure 3, wherein the support unit 4 is at least sectionwise in contact with the tank device 2 and the fuselage structure 3. The lattice structure can have a first characteristic length l1 that is about one fiftieth of the fuselage diameter d3 or less. Specifically, the fuselage assembly 1 in Fig. 2 comprises two support units 4.

Here, the fuselage structure 4 can comprise a pressure bulkhead 5, which is mechanically coupled to the support unit 4 such that loads in a longitudinal direction X of the fuselage structure 2 can be carried and transferred by the pressure bulkhead 5 into the surrounding fuselage structure 2 and/or trusswork structure. Additionally or alternatively, loads can be carried by the support unit 4 in the longitudinal direction X of the fuselage structure 2. The pressure bulkhead 5 can support the loads in the longitudinal direction X at its connection to the fuselage structure 2.

One of the two support units 4 is arranged between the pressure bulkhead 5 and the tank device 2. In particular, the support unit 4 is in contact with both the pressure bulkhead 5 and the tank device 2.

For example, the tank device 2 can comprise an outer tank diameter d2 that is about fifty times, in particular a hundred times, of the first characteristic length l1 or more. Alternatively or additionally, the first characteristic length l1 can be in the range of about 4 mm to about 100 mm, preferably in the range of about 7.5 mm to about 75 mm, in particular in the range of about 10 mm to about 50 mm.

Exemplarily, the lattice structure can further have a second characteristic length l2 that is shorter than the first characteristic length l1. Here, a finer portion of the support unit 4 can be located in an area where higher local loads are expected, referring to as load introduction points, and also near interfaces to the tank device 2, the pressure bulkhead 5, the fuselage structure 2 or the like. The relatively coarser portion can be located in an inner region of the support unit 4 and/or a central region of the pressure bulkhead 5.

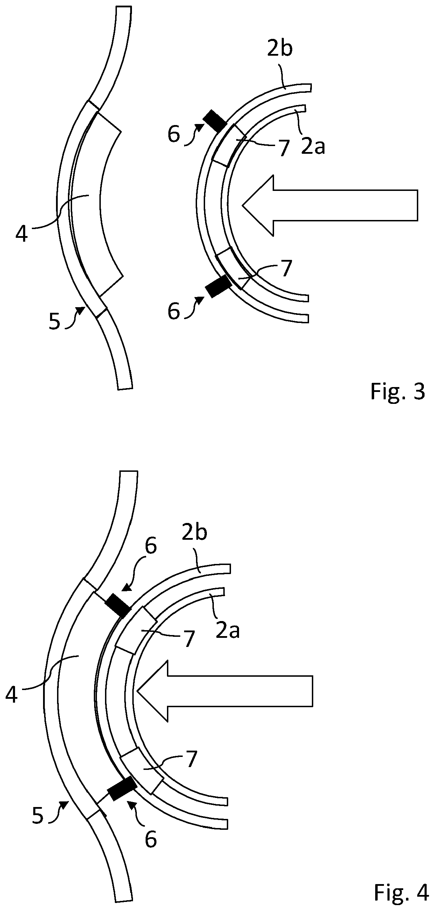

Fig. 3 shows a schematic illustration in a cut view of a tank device 2 comprising means 6 for a form fit before installing it to a support unit 4 arranged at a pressure bulkhead 5 according to a further embodiment of the invention. Fig. 4 shows a schematic illustration in a cut view of the tank device 2 of Fig. 3 after installing it to the support unit 4 arranged at a pressure bulkhead 5. Specifically, the tank device 2 and the pressure bulkhead 5 of Figs. 3 and 4 can be implemented in the fuselage assembly of Fig. 1 or 2.

Exemplarily, the tank device 2 comprises an inner tank wall 2a and an outer tank wall 2b, which surrounds the inner tank wall 2a contactlessly, wherein a lattice structure layer 7 is disposed sectionwise between the inner tank wall 2a and the outer tank wall 2b. Thus, the lattice structure layer 7 can prevent the inner tank wall 2a from getting into contact with the outer tank wall 2b in case of a load on the tank device 2 exceeding a predefined threshold. In particular, the outer tank wall 2b can surround the inner tank wall 2a contactlessly except for supports between the inner tank wall and the outer tank wall, wherein the supports are configured to keep the inner tank wall 2a in place relative to the outer tank wall 2b.

Furthermore, the tank device 2 can comprise the inner tank wall 2a for containing a fuel and the outer tank wall surrounding the inner tank wall to define a vacuum insulating volume therebetween. The inner tank wall 2a can transmit a load from the fuel (mass) through the supports to the outer tank wall 2b, where this load is supported by means of a tank support, for example by the support unit 4 respectively the lattice structure.

Moreover, the tank device 2 can comprise means 6 for providing a form fit with the support unit 4 in a radial direction Y; Z of the fuselage structure 3, wherein the support unit 4 is in contact with the pressure bulkhead 5. Here, the means 6 protrude from a surface of the tank device 2. The means 6 can comprise or be made of the same lattice structure as the support unit 4. The means 6 can be configured as a form fit interface between the tank device 2 and the support unit 4 in order to reduce or avoid peak loads. In particular, the outer tank wall 2b can surround the inner tank wall 2a contactlessly except for supports between the inner tank wall and the outer tank wall, wherein the supports are configured to keep the inner tank wall 2a in place relative to the outer tank wall 2b.

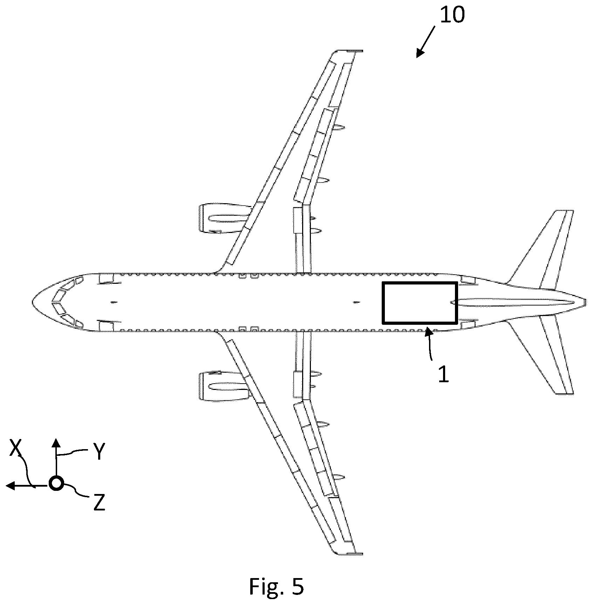

Fig. 5 shows a schematic illustration of an aircraft 10 comprising a fuselage assembly 1 according to a further embodiment of the invention. Specifically, the aircraft 10 can be configured as a hydrogen powered aircraft. The fuselage assembly 1 can be arranged at an aft fuselage.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: fuselage assembly
- 2: tank device
- 2a: inner tank wall
- 2b: outer tank wall
- 3: fuselage structure
- 4: support unit
- 5: pressure bulkhead
- 6: means for providing a form fit
- 7: lattice structure layer
- 10: aircraft

- l1: first characteristic length
- l2: second characteristic length
- d2: outer tank diameter
- d3: fuselage diameter

- X: longitudinal direction of the fuselage structure
- Y, Z: radial direction of the fuselage structure

## Claims

1. Fuselage assembly (1) for tank integration and absorbing impact energy, in particular being used in an aircraft, the fuselage assembly (1) comprising:
a tank device (2);
a fuselage structure (3) with a fuselage diameter (d3), wherein the fuselage structure (3) at least partly encloses the tank device (2); and
a support unit (4) with a lattice structure for supporting the tank device (2) inside the fuselage structure (3), wherein the support unit (4) is at least sectionwise in contact with the tank device (2) and the fuselage structure (3),
wherein the lattice structure has a first characteristic length (l1) that is about one fiftieth of the fuselage diameter (d3) or less.

2. Fuselage assembly (1) according to claim 1, wherein the first characteristic length (l1) is about a hundredth of the fuselage diameter (d3) or less.

3. Fuselage assembly (1) according to claim 1 or 2, wherein the tank device (2) comprises an outer tank diameter (d2) that is about fifty times, in particular a hundred times, of the first characteristic length (l1) or more.

4. Fuselage assembly (1) according to one of the preceding claims, wherein the first characteristic length (l1) is in the range of about 4 mm to about 100 mm, preferably in the range of about 7.5 mm to about 75 mm, in particular in the range of about 10 mm to about 50 mm.

5. Fuselage assembly (1) according to one of the preceding claims, wherein the lattice structure further has a second characteristic length (l2) that is shorter than the first characteristic length (l1).

6. Fuselage assembly (1) according to one of the preceding claims, wherein the support unit (4) comprises a linear-elastic deformation behavior up to a predetermined yield stress in the support unit (4) and a plastic deformation behavior above the predetermined yield stress in the support unit (4).

7. Fuselage assembly (1) according to one of the preceding claims, wherein the fuselage structure (3) comprises an unpressurized caudal tank compartment.

8. Fuselage assembly (1) according to one of the preceding claims, wherein the fuselage structure (4) comprises a pressure bulkhead (5), which is mechanically coupled to the support unit (4) such that loads are carried by the pressure bulkhead (5) in a longitudinal direction (X) of the fuselage structure (2).

9. Fuselage assembly (1) according to claim 8, wherein the tank device (2) comprises means (6) for providing a form fit with the support unit (4) in a radial direction (Y; Z) of the fuselage structure (3), wherein the support unit (4) is in contact with the pressure bulkhead (5).

10. Fuselage assembly (1) according to claim 9, wherein the means (6) protrude from a surface of the tank device (2).

11. Fuselage assembly (1) according to one of the preceding claims, wherein the tank device (2) comprises an inner tank wall (2a) and an outer tank wall (2b), which surrounds the inner tank wall (2a) contactlessly, wherein a lattice structure layer (7) is disposed sectionwise between the inner tank wall (2a) and the outer tank wall (2b).

12. Aircraft (10) with a fuselage assembly (1) according to one of the preceding claims.
